(19) Europäisches Patentamt
European Patent Office
Office européen des brevets

(11) **EP 3 012 657 B1**

(12) **FASCICULE DE BREVET EUROPEEN**

(45) Date de publication et mention de la délivrance du brevet:
**04.09.2019 Bulletin 2019/36**

(51) Int Cl.:
*G01S 13/62* (2006.01)   *G01S 13/92* (2006.01)
*G08G 1/054* (2006.01)   *G08G 1/017* (2006.01)
*G08G 1/056* (2006.01)

(21) Numéro de dépôt: **15185724.0**

(22) Date de dépôt: **17.09.2015**

(54) **DÉTERMINATION DU SENS DE DÉPLACEMENT D'UN VÉHICULE**

BESTIMMUNG DER BEWEGUNGSRICHTUNG EINES FAHRZEUGS

DETERMINING THE DIRECTION OF TRAVEL OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2014 FR 1460065**

(43) Date de publication de la demande:
**27.04.2016 Bulletin 2016/17**

(73) Titulaire: **Idemia Identity & Security France 92400 Courbevoie (FR)**

(72) Inventeurs:
• **ROMBAUX, Sylvain**
  **92445 Issy-Les-Moulineaux (FR)**
• **GUIDON, Eric**
  **92445 Issy-Les-Moulineaux (FR)**

(74) Mandataire: **Cabinet Plasseraud**
  **66, rue de la Chaussée d'Antin**
  **75440 Paris Cedex 09 (FR)**

(56) Documents cités:
**EP-A1- 0 933 648      EP-A1- 1 528 409**
**EP-A1- 1 610 279      FR-A1- 2 873 480**
**US-A- 4 740 045       US-B1- 7 038 614**

**Description**

La présente invention concerne une nouvelle façon de déterminer le sens de déplacement d'un véhicule qui circule sur une route.

Les unités de contrôle routier combinent chacune un cinémomètre et un ou plusieurs dispositifs de prise de vues. Le cinémomètre mesure la vitesse du véhicule et l'un des dispositifs de prise de vues saisit une image où doit impérativement figurer un seul véhicule, avec la plaque d'immatriculation de ce véhicule en particulier si la vitesse mesurée est supérieure à la limite autorisée, et où doit préférentiellement figurer au moins un élément de contexte de la scène.

Lorsqu'une unité de contrôle routier est destinée à contrôler des véhicules qui circulent dans les deux sens, c'est-à-dire des véhicules qui se rapprochent de l'unité de contrôle routier mais aussi des véhicules qui s'en éloignent, l'instant de déclenchement du/des dispositif(s) de prise de vues doit être adapté en fonction du sens de déplacement du véhicule, pour que l'image saisie soit centrée sur le véhicule et contienne sa plaque d'immatriculation. Autrement dit, la temporisation du déclenchement de chaque dispositif de prise de vues par rapport à l'instant où le véhicule est détecté par le cinémomètre, doit être sélectionnée en fonction du sens de déplacement du véhicule. Il est donc nécessaire que le cinémomètre détermine de façon fiable ce sens de déplacement du véhicule.

Une façon usuelle de déterminer le sens de déplacement consiste à mesurer au moins deux positions successives du véhicule à l'intérieur du champ de détection du cinémomètre, chaque position étant déduite du retard de propagation de l'onde radiofréquence qui est émise puis reçue par le cinémomètre, entre celui-ci et le véhicule. Une telle méthode est mise en oeuvre pour des cinémomètres à effet Doppler, et notamment pour ceux du type à deux fréquences d'émission. Mais la précision avec laquelle chaque position du véhicule est ainsi mesurée, est insuffisante par rapport à la fiabilité qui est requise pour la détermination du sens de déplacement du véhicule.

De façon connue, par exemple dans EP0933648, la vitesse du véhicule peut être mesurée en utilisant un cinémomètre à effet Doppler du type à deux fréquences d'émission, en exécutant les étapes suivantes pour chacune des deux fréquences d'émission selon un multiplexage temporel :

/1/ émission d'une onde à cette fréquence d'émission en direction du véhicule ;

/2/ réception d'une onde qui est produite par réflexion de l'onde émise sur le véhicule ;

/3/ réalisation de deux mélanges de l'onde reçue avec l'onde émise, ces deux mélanges étant réalisés en appliquant à l'onde émise, préalablement aux mélanges, deux déphasages constants qui ont un écart entre eux de 90°, et qui sont affectés un-à-un aux deux mélanges ;

/4/ filtrage de chaque mélange, de façon à obtenir deux signaux de mélanges filtrés qui contiennent chacun une composante qui varie à une fréquence d'un décalage Doppler généré par le véhicule en déplacement ; et

/5/ soustraire l'un à l'autre les deux signaux de mélanges filtrés, pour obtenir un signal de différence ayant une composante qui varie à la fréquence du décalage Doppler, et qui possède un déphasage initial dû à la durée de propagation de l'onde émise et de l'onde reçue entre le cinémomètre et le véhicule.

La vitesse de déplacement du véhicule est ensuite déduite de la valeur de la fréquence du décalage Doppler, qui est mesurée à partir des signaux de mélanges filtrés.

A partir de la situation existante qui vient d'être rappelée, un but de l'invention consiste à proposer une nouvelle façon de déterminer le sens de déplacement d'un véhicule, qui soit plus fiable et aisément intégrable aux systèmes existants de cinémomètres à effet Doppler du type à deux fréquences d'émission.

Un but complémentaire de l'invention est que cette nouvelle façon de déterminer le sens de déplacement du véhicule puisse être mise en oeuvre avec les cinémomètres existants, en limitant les modifications de conception des dispositifs existants.

Pour atteindre ces buts ou d'autres, un premier aspect de l'invention propose un procédé pour déterminer le sens de déplacement d'un véhicule, en rapprochement ou en éloignement par rapport au cinémomètre à effet Doppler, qui comprend les étapes /1/ à /5/ rappelées ci-dessus. Selon l'invention, le procédé comprend en outre une étape /6/ lors de laquelle le sens de déplacement du véhicule est déduit à partir d'un signe d'un déphasage apparent existant entre les signaux de différences qui ont été obtenus à l'étape /5/ respectivement pour les deux fréquences d'émission, pour les composantes de ces signaux de différences à la fréquence du décalage Doppler.

Etant donné que le sens de déplacement est déduit du déphasage apparent qui sépare deux composantes sinusoïdales de signaux à variations temporelles, cette détermination du sens de déplacement présente un niveau de fiabilité qui est particulièrement élevé.

En outre, les étapes /1/ à /5/ sont reprises du procédé de mesure de la vitesse du véhicule, si bien que l'invention nécessite une adaptation très limitée des cinémomètres existants pour être mise en oeuvre avec ceux-ci. Cette adaptation consiste à comparer les phases des deux signaux de différences, pour la fréquence du décalage Doppler. Autrement dit, l'information du sens de déplacement du véhicule est obtenue à un même niveau dans la chaîne de détection et de traitement des signaux du cinémomètre, que l'information de vitesse du véhicule, et aussi l'information de distance du véhicule par rapport au cinémomètre.

Lorsque le cinémomètre est couplé à au moins un dispositif de prise de vues au sein d'une unité de contrôle routier, le sens de déplacement du véhicule tel que déduit à l'étape /6/, peut être utilisé pour sélectionner au moins un instant de déclenchement du dispositif de prise de vues. Cette sélection assure qu'une des plaques d'immatriculation du véhicule soit contenue dans une image qui est saisie par le dispositif de prise de vues à l'instant du déclenchement de celui-ci.

Dans le cas où le cinémomètre est couplé à deux dispositifs de prise de vues au sein de l'unité de contrôle routier, ceux-ci peuvent avoir des directions de pointage qui sont différentes et ajustées de sorte que le véhicule soit contenu dans un champ optique de l'un ou l'autre des dispositifs de prise de vues en fonction du sens de déplacement du véhicule. Alors, si les deux dispositifs de prise de vues sont activés à chaque instant de déclenchement pour saisir deux images simultanément, l'image qui a été saisie par celui des deux dispositifs de prise de vues dont la direction de pointage a été ajustée pour le sens de déplacement du véhicule tel que déduit à l'étape /6/, peut ensuite être sélectionnée.

Selon un perfectionnement de l'invention, l'étape /6/ peut comprendre les sous-étapes suivantes, qui sont effectuées séparément pour chaque fréquence d'émission :

/6-1/ calculer une transformée de Fourier par rapport au temps, du signal de différence qui a été obtenu à l'étape /5/ pour cette fréquence d'émission ;

/6-2/ déterminer une fréquence qui correspond à un maximum de module d'amplitude de la transformée de Fourier ; et

/6-3/ calculer l'amplitude complexe de la transformée de Fourier pour cette fréquence de maximum.

Le signe du déphasage apparent existant entre les signaux de différences qui ont été obtenus à l'étape /5/ respectivement pour les deux fréquences d'émission, peut alors être obtenu comme le signe d'une différence d'argument qui existe entre les amplitudes complexes calculées à la sous-étape /6-3/ pour les deux fréquences d'émission. Un tel perfectionnement permet d'isoler les composantes de signaux qui sont générées par le déplacement du véhicule, par rapport à des composantes parasites moins intenses qui sont générées par d'autres objets en mouvement présents dans le champ de détection du cinémomètre. De cette façon, la fiabilité du sens de déplacement qui est déterminé pour le véhicule, est encore augmentée.

Avantageusement, l'un au moins des perfectionnements suivants peut être appliqué :

- les étapes /1/ à /4/ peuvent être effectuées pour les deux fréquences d'émission d'une façon continuelle au cours du multiplexage temporel, sur des signaux qui sont composés de segments successifs relatifs en alternance à l'une ou l'autre des fréquences d'émission. L'étape /5/ peut ensuite être effectuée séparément sur deux autres signaux qui sont dédiés un-à-un aux deux fréquences d'émission ; et

- au moins une étape supplémentaire peut être effectuée pour chaque fréquence d'émission entre les étapes /5/ et /6/, lors de laquelle chaque signal de différence est filtré de façon à supprimer des composantes spectrales qui ont été provoquées par le multiplexage temporel.

Un second aspect de l'invention propose un cinémomètre à effet Doppler du type à deux fréquences d'émission, qui est adapté pour :

- émettre une onde qui possède l'une puis l'autre des deux fréquences d'émission selon un multiplexage temporel, en direction d'un véhicule circulant dans un sens de déplacement en rapprochement ou en éloignement par rapport au cinémomètre ;

- recevoir une onde qui est produite par réflexion de l'onde émise sur le véhicule ;

- pour chaque fréquence d'émission, réaliser deux mélanges de l'onde reçue avec l'onde émise, ces deux mélanges étant réalisés en appliquant à l'onde émise, préalablement aux mélanges, deux déphasages constants qui ont un écart entre eux de 90°, et qui sont affectés un-à-un aux deux mélanges ;

- filtrer chaque mélange, de façon à obtenir deux signaux de mélanges filtrés qui contiennent chacun pour chaque fréquence d'émission, une composante qui varie à la fréquence du décalage Doppler généré par le véhicule en déplacement ; et

- pour chaque fréquence d'émission, soustraire l'un à l'autre les deux signaux de mélanges filtrés qui sont relatifs à cette fréquence d'émission, pour obtenir un signal de différence ayant une composante qui varie à la fréquence du décalage Doppler et qui possède un déphasage initial dû à une durée de propagation de l'onde émise et de l'onde reçue entre le cinémomètre et le véhicule.

Selon l'invention, le cinémomètre comprend en outre des moyens de traitement adaptés pour déduire le sens de déplacement du véhicule, en rapprochement ou en éloignement, à partir du signe du déphasage apparent existant entre les signaux de différences qui ont été obtenus respectivement pour les deux fréquences d'émission, pour les composantes de ces signaux de différences à la fréquence du décalage Doppler. Ces moyens de traitement du cinémomètre possèdent alors une sortie qui est adaptée pour délivrer un signal binaire représentatif du sens de déplacement du véhicule ainsi déduit.

Un tel cinémomètre est adapté pour mettre en oeuvre un procédé qui est conforme au premier aspect de l'invention, possiblement y compris les perfectionnements de ce procédé qui ont été cités.

L'invention propose aussi une unité de contrôle routier qui comprend :

- un cinémomètre qui est conforme au second aspect de l'invention,

- au moins un dispositif de prise de vues, et

- un contrôleur qui est couplé au dispositif de prise de vues et à la sortie des moyens de traitement du cinémomètre, et qui est adapté pour sélectionner au moins un instant de déclenchement du dispositif de prise de vues en fonction du signal binaire délivré par la sortie des moyens de traitement, et pour déclencher le dispositif de prise de vues à chaque instant de déclenchement sélectionné.

Possiblement, l'unité de contrôle routier peut comprendre deux dispositifs de prise de vues qui possèdent des directions de pointage respectives différentes. Le contrôleur est alors couplé à chaque dispositif de prise de vues de façon à activer les deux dispositifs de prise de vues à chaque instant de déclenchement pour saisir deux images simultanément, avec une image par chaque dispositif de prise de vues. Dans ce cas, le contrôleur peut être adapté pour sélectionner ensuite celle des deux images qui a été saisie par l'un ou l'autre des dispositifs de prise de vues en fonction du signal binaire qui est délivré par la sortie des moyens de traitement.

D'autres particularités et avantages de la présente invention apparaîtront dans la description ci-après d'exemples de mise en oeuvre non limitatifs, en référence aux dessins annexés, dans lesquels :

- la figure 1 illustre des conditions d'une mise en oeuvre de l'invention ;

- la figure 2 est un diagramme simplifié d'une chaîne de génération et de traitement de signaux, qui peut être utilisée pour mettre en oeuvre l'invention ; et

- la figure 3 est un tableau synoptique des étapes d'un procédé selon l'invention.

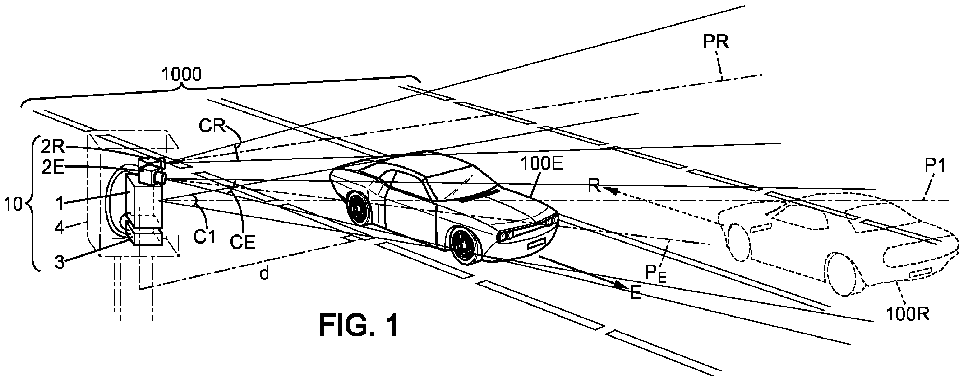

Pour raison de clarté, les dimensions des éléments qui sont représentés dans la figure 1 ne correspondent ni à des dimensions réelles ni à des rapports de dimensions réels. En outre, des références identiques qui sont indiquées dans des figures différentes désignent des éléments identiques.

Les références indiquées dans la figure 1 ont les significations suivantes :

10 unité de contrôle routier, pour contrôler des vitesses de véhicules

1 cinémomètre à effet Doppler, du type à deux fréquences d'émission

2E/2R deux dispositifs de prise de vues, par exemple du type appareils photographiques

3 contrôleur de l'unité de contrôle routier

4 cabine de l'unité de contrôle routier, contenant le cinémomètre, les deux dispositifs de prise de vues et le contrôleur

P1 axe radioélectrique du cinémomètre

C1 champ de détection du cinémomètre, réparti autour de l'axe radioélectrique P1

PE direction de pointage du dispositif de prise de vues 2E

CE champ optique du dispositif de prise de vues 2E, réparti autour de la direction de pointage PE

PR direction de pointage du dispositif de prise de vues 2R

CR champ optique du dispositif de prise de vues 2R, réparti autour de la direction de pointage PR

1000 route à double sens de circulation, par exemple à deux voies qui sont dédiées une-à-une aux deux sens de circulation opposés

100E véhicule circulant sur la route 1000 dans le sens d'un éloignement du cinémomètre

100R véhicule circulant sur la route 1000 dans le sens d'un rapprochement vers le cinémomètre

E sens de déplacement en éloignement par rapport au cinémomètre

R sens de déplacement en rapprochement par rapport au cinémomètre

d distance de rive, définie comme la distance mesurée horizontalement entre la projection sur le sol du centre de l'antenne d'émission-réception du cinémomètre, et la ligne de rive de la route

Le dispositif de prise de vues 2E est dédié à la saisie d'au moins une image qui contient le véhicule 100E, ou une partie seulement de ce véhicule qui comprend sa plaque d'immatriculation arrière. Autrement dit, le dispositif de prise de vues 2E est dédié aux véhicules qui se déplacent sur la route 1000 dans le sens d'un éloignement par rapport au cinémomètre 1.

Indépendamment, le dispositif de prise de vues 2R est dédié à la saisie d'au moins une image qui contient le véhicule 100R, ou une partie seulement de ce véhicule qui comprend sa plaque d'immatriculation avant. Le dispositif de prise de vues 2R est ainsi dédié aux véhicules qui se déplacent sur la route 1000 dans le sens d'un rapprochement par rapport au cinémomètre 1.

De façon connue, les directions de pointage PE et PR sont orientées angulairement de part et d'autre de l'axe radioélectrique P1, en projection dans un plan horizontal. De plus, la direction de pointage PR forme avec la direction de la route 1000, un angle qui est plus grand que celui qui existe entre la direction de pointage PE et la direction de la route 1000.

Dans chaque cas, pour que l'image qui est saisie par le dispositif de prise de vues 2E, 2R contienne effectivement la plaque d'immatriculation voulue avec des conditions de lisibilité satisfaisantes, le dispositif de prise de vues doit être déclenché avec une temporisation précise à partir de la détection du véhicule par le cinémomètre 1. En particulier, cette temporisation est plus courte pour un véhicule qui se rapproche du cinémomètre (véhicule 100R) que pour un véhicule qui s'en éloigne (véhicule 100E). Il est donc nécessaire de disposer au sein de l'unité de contrôle routier 10, d'une information qui soit fiable pour le sens de déplacement E ou R d'un véhicule qui est en cours de contrôle cinémométrique.

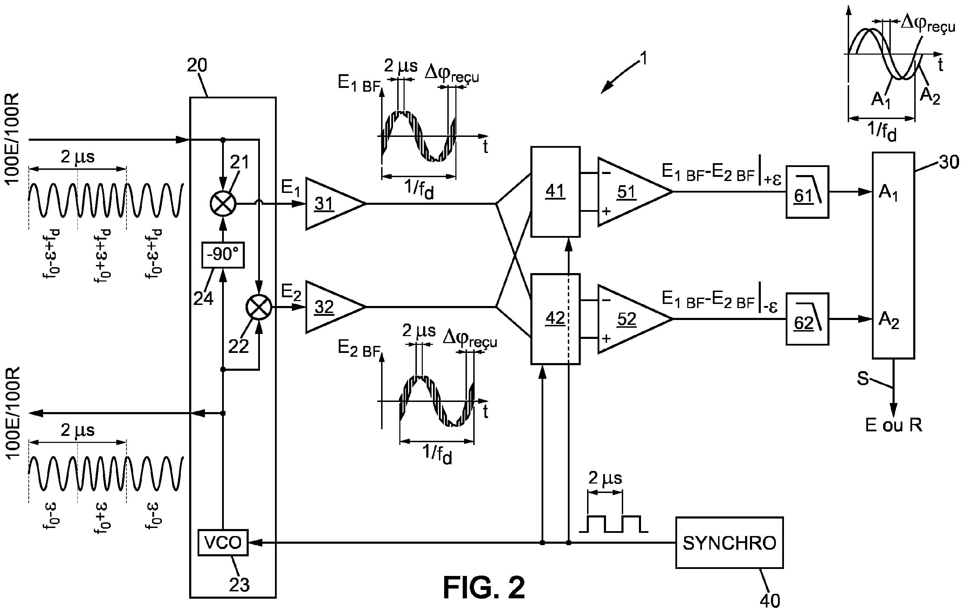

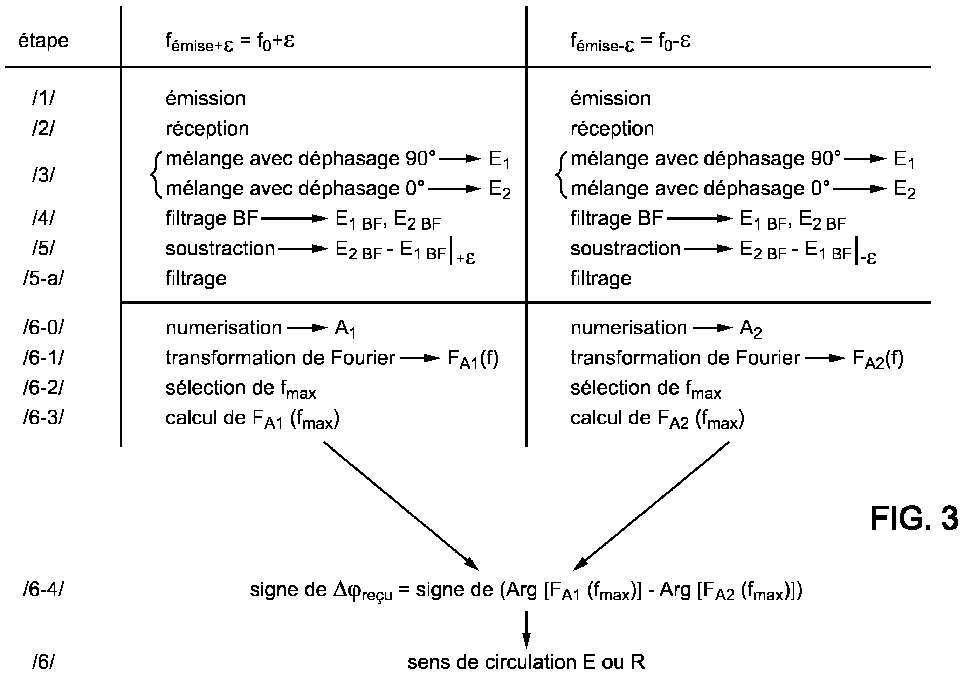

En référence à la figure 2, le cinémomètre 1 comprend une antenne d'émission-réception 20, par exemple du type à détection hétérodyne qui comprend deux mélangeurs 21 et 22, un oscillateur local 23 et un retardateur de 90° (degrés) référencé 24. L'oscillateur 23 peut être du type contrôlé en tension, noté VCO pour «voltage-controlled oscillator», et capable de générer un signal radiofréquence, par exemple avec une fréquence centrale $f_0$ égale à 24,125 GHz (gigaHertz). Une tension en créneaux peut être appliquée à l'entrée de commande en tension de l'oscillateur 23 par un modulateur 40, noté SYNCHRO, pour moduler la fréquence de l'onde qui est émise par l'antenne 20. Par exemple, la période temporelle de la modulation qui est générée par le modulateur 40 peut être égale à 2 $\mu$s (microseconde). Ainsi, l'antenne 20 peut émettre en direction du véhicule 100E/100R une onde qui possède une fréquence alternativement égale à $f_0+\varepsilon$ et à $f_0-\varepsilon$, d'une façon multiplexée temporellement avec des fenêtres successives de 1 $\mu$s (étape /1/ de la figure 3). Par exemple, l'écart fréquentiel $\varepsilon$ peut être égal à 350 kHz (kiloHertz). Dans la suite et sur la figure 3, les deux fréquences d'émission sont notées respectivement $f_{\text{émise}+\varepsilon}$ pour $f_{0+\varepsilon}$, et $f_{\text{émise}-\varepsilon}$ pour $f_0-\varepsilon$.

Une partie de cette onde est réfléchie par le véhicule 100E/100R avec un décalage de fréquence qui est dû à l'effet Doppler, puis détectée par l'antenne 20 (étape /2/). De façon connue, le décalage de fréquence est égal à $\pm f_d = \pm(2 \cdot f_0 \cdot V \cdot \cos\alpha)/C$ au premier ordre, où V est la vitesse du véhicule 100E/100R, $\alpha$ est l'angle entre l'axe radioélectrique P1 de l'antenne 20 et la direction de déplacement du véhicule, et C est la vitesse de la lumière. Dans cette expression du décalage Doppler, le signe - est relatif au cas du véhicule 100E qui s'éloigne du cinémomètre 1, et le signe + est relatif au cas du véhicule 100R qui se rapproche du cinémomètre 1. Pour des conditions usuelles d'installation du cinémomètre 1 au bord de la route 1000, l'angle $\alpha$ peut être de l'ordre de 25°. Ainsi, l'onde qui est réfléchie par le véhicule 100E/100R est constituée de segments sinusoïdaux successifs de durée individuelle 1 $\mu$s, et qui ont alternativement l'une des deux fréquences $f_{\text{émise}+\epsilon} \pm f_d$ et $f_{\text{émise}-\epsilon} \pm f_d$, avec le signe - devant $f_d$ pour le cas du véhicule 100E et le signe + pour le cas du véhicule 100R.

Pour la détection hétérodyne, le retardateur 24 applique un retard d'une quadrature à l'onde émise, pour chaque fréquence d'émission $f_{\text{émise}+\epsilon}$ et $f_{\text{émise}-\epsilon}$, et le mélangeur 21 mélange l'onde émise ainsi retardée avec l'onde reçue (étape /3/). En parallèle, le mélangeur 22 mélange l'onde émise avec l'onde reçue, sans qu'un retard soit appliqué à l'onde émise. Les signaux de mélanges qui sont délivrés par les mélangeurs 21 et 22, respectivement notés $E_1$ et $E_2$, sont alors filtrés pour supprimer les composantes de ces signaux qui ont des fréquences élevées, c'est-à-dire de l'ordre de $2 \cdot f_0$ (étape /4/). Ainsi, un premier signal de mélange filtré, noté $E_{1\,BF}$ pour désigner la partie à basse fréquence du signal de mélange $E_1$, provient du mélangeur 21, et un second signal de mélange filtré, noté $E_{2\,BF}$, provient simultanément du mélangeur 22. Ces deux signaux de mélanges filtrés forment ensemble une sortie de démodulation I-Q. De façon connue, ils ont pour expressions :

$$E_{1\,BF} = \tfrac{1}{2}AB \cdot \cos(\pm 2\Pi f_d \cdot t + \Pi/2 - \varphi_{\text{reçu}})$$

et

$$E_{2\,BF} = \tfrac{1}{2}AB \cdot \cos(\pm 2\Pi f_d \cdot t - \varphi_{\text{reçu}})$$

où A et B désignent les amplitudes respectives de l'onde qui est émise par l'antenne 20 et de l'onde qui est reçue, t désigne le temps, et $\varphi_{\text{reçu}}$ est le déphasage de l'onde reçue par rapport à l'onde émise, à chaque instant du fonctionnement de l'antenne 20. Le déphasage $\varphi_{\text{reçu}}$ est dû à la durée de propagation cumulée de l'onde émise puis de l'onde reçue entre l'antenne 20 et le véhicule 100E/100R. Ce déphasage $\varphi_{\text{reçu}}$ prend alternativement deux valeurs distinctes $\varphi_{\text{reçu}+\epsilon}$ et $\varphi_{\text{reçu}-\epsilon}$, respectivement pour les deux fréquences d'émission $f_{\text{émise}+\epsilon}$ et $f_{\text{émise}-\epsilon}$ dans les segments temporels respectifs du multiplexage temporel. L'écart entre les deux valeurs $\varphi_{\text{reçu}+\epsilon}$ et $\varphi_{\text{reçu}-\epsilon}$ dépend de la distance D entre l'antenne 20 et le véhicule 100E/100R, selon la formule :

$$\Delta\varphi_{\text{reçu}} = \varphi_{\text{reçu}+\epsilon} - \varphi_{\text{reçu}-\epsilon} = 8\Pi \cdot \epsilon \cdot D/C$$

Les conditions d'installation de l'unité de contrôle routier 10 au bord de la route 1000 sont sélectionnées pour assurer que $\Delta\varphi_{\text{reçu}}$ soit inférieur à $\Pi/2$.

Les filtrages pour produire les signaux de mélanges filtrés $E_{1\,BF}$ et $E_{2\,BF}$ à partir des signaux $E_1$ et $E_2$, sont réalisés par les filtres 31 et 32 qui sont disposés à la sortie des mélangeurs 21 et 22 (figure 2). Comme représenté en encarts dans la figure 2, chacun des signaux de mélanges filtrés $E_{1\,BF}$ et $E_{2\,BF}$ est un multiplexage temporel, selon la constante de temps de multiplexage de 2 $\mu$s, de deux composantes chacune sinusoïdale à la fréquence commune du décalage Doppler $\pm f_d$. En outre, au sein de chaque signal de mélange filtré, les deux composantes sinusoïdales présentent l'une par rapport à l'autre le déphasage $\Delta\varphi_{\text{reçu}}$. Enfin, les signaux de mélanges filtrés $E_{1\,BF}$ et $E_{2\,BF}$ sont déphasés de $\Pi/2$ entre eux.

L'échantillonneur-bloqueur 41, qui est séquencé par le modulateur 40, sélectionne dans les signaux de mélanges filtrés $E_{1\,BF}$ et $E_{2\,BF}$, des parties simultanées de ceux-ci qui correspondent au fonctionnement d'émission à la fréquence $f_{\text{émission}+\epsilon}$. Parallèlement, l'échantillonneur-bloqueur 42, qui est aussi séquencé par le modulateur 40, sélectionne dans les signaux de mélanges filtrés $E_{1\,BF}$ et $E_{2\,BF}$, d'autres parties simultanées de ceux-ci qui correspondent au fonctionnement d'émission à la fréquence $f_{\text{émission}-\epsilon}$. Le soustracteur 51 réalise alors une soustraction entre les parties simultanées des signaux de mélanges filtrés $E_{1\,BF}$ et $E_{2\,BF}$ qui ont été sélectionnées par l'échantillonneur-bloqueur 41, pour produire un premier signal de différence qui est associé à la fréquence d'émission $f_{\text{émission}+\epsilon}$ (étape /5/ de la figure 3). De la même façon, le soustracteur 52 réalise une soustraction entre les autres parties simultanées des signaux de mélanges filtrés $E_{1\,BF}$ et $E_{2\,BF}$ qui ont été sélectionnées par l'échantillonneur-bloqueur 42, pour produire un second signal de différence qui est associé à la fréquence d'émission $f_{\text{émission}-\epsilon}$. Enfin, les filtres 61 et 62 suppriment des composantes à très basses fréquences qui ont été générées par le multiplexage temporel, et éventuellement aussi par les échantillonneurs-bloqueurs 41 et 42 (étape /5-a/). Le premier signal de différence après la sortie du filtre 61 est alors :

$$E_{2\,BF} - E_{1\,BF}\,|_{+\epsilon} = AB \cdot 2^{-\frac{1}{2}} \cdot \cos\,(\pm 2\Pi f_d \cdot t - \Pi/4 - \varphi_{\text{reçu}+\epsilon})$$

correspondant au fonctionnement d'émission à la fréquence $f_{\text{émission}+\varepsilon}$, et le second signal de différence à la sortie du filtre 62 est :

$$E_{2\,BF} - E_{1\,BF}\,|_{-\varepsilon} = AB \cdot 2^{-\frac{1}{2}} \cdot \cos\,(\pm 2\Pi f_d \cdot t - \Pi/4 - \varphi_{\text{reçu}-\varepsilon})$$

correspondant au fonctionnement d'émission à la fréquence $f_{\text{émission}-\varepsilon}$. Ces deux signaux de différences varient sinusoïdalement à la fréquence du décalage Doppler $\pm f_d$, et sont déphasés l'un par rapport à l'autre de $\Delta\varphi_{\text{reçu}}$. Plus exactement, la différence entre les termes constants des phases de $E_{2\,BF}-E_{1\,BF}\,|_{+\varepsilon}$ et $E_{2\,BF}-E_{1\,BF}\,|_{-\varepsilon}$, égale à l'opposé de $\Delta\varphi_{\text{reçu}}$ dont la formule a été donnée plus haut, est toujours négative, mais un signe apparent qui est variable est induit par le signe du décalage Doppler $\pm f_d$. Pour cette raison, $\pm\Delta\varphi_{\text{reçu}}$ a été appelé déphasage apparent existant entre les signaux de différences, dans la partie générale de la description. Ainsi, lorsque le véhicule s'éloigne du cinémomètre 1 (véhicule 100E de la figure 1), le signal de différence $E_{2\,BF} - E_{1\,BF}\,|_{+\varepsilon}$ apparaît en avance de phase par rapport au signal $E_{2\,BF} - E_{1\,BF}\,|_{-\varepsilon}$, et l'inverse si le véhicule se rapproche du cinémomètre 1 (véhicule 100R). Le sens du déplacement E ou R du véhicule peut donc être déduit directement du sens du déphasage qui apparaît entre les deux signaux de différence $E_{2\,BF} - E_{1\,BF}|_{+\varepsilon}$ et $E_{2\,BF} - E_{1\,BF}\,|_{-\varepsilon}$, ceux-ci étant obtenus un-à-un pour les fréquences d'émission $f_{\text{émise}+\varepsilon}$ et $f_{\text{émise}-\varepsilon}$ (étape /6/ de la figure 3). Une telle analyse comparative des signaux de différences est effectuée par des moyens de traitement référencés 30 sur la figure 2. Ces moyens de traitement 30 sont pourvus d'une sortie S pour délivrer un signal binaire qui est représentatif du signe du déphasage apparent $\pm\Delta\varphi_{\text{reçu}}$. Par ailleurs, la mesure de la fréquence apparente des signaux de différences $E_{2\,BF} - E_{1\,BF}\,|_{+\varepsilon}$ et $E_{2\,BF} - E_{1\,BF}\,|_{-\varepsilon}$, correspondant à $f_d$, fournit une évaluation de la vitesse V du véhicule. Ainsi, dans l'invention, l'information du sens de déplacement du véhicule est déduite à un même niveau dans la chaîne de traitement du signal que l'information sur la vitesse de déplacement du véhicule. Le facteur d'amplitude AB des signaux de différences $E_{2\,BF} - E_{1\,BF}\,|_{+\varepsilon}$ et $E_{2\,BF} - E_{1\,BF}\,|_{-\varepsilon}$ délivre en outre une information d'énergie de signal, qui quantifie la fiabilité des résultats de la mesure de vitesse et de la détermination du sens de déplacement. Enfin, $\Delta\varphi_{\text{reçu}}$ peut fournir une évaluation de la distance de séparation qui existe entre véhicule et le cinémomètre 1. De façon générale pour l'invention, les conditions de l'installation de l'unité de contrôle routier 10 au bord de la route 1000 assurent que le déphasage apparent $\pm\Delta\varphi_{\text{reçu}}$ soit compris entre $-\Pi/2°$ et $+\Pi/2°$, pour éviter qu'un saut de $\Pi$ puisse introduire une inversion dans la déduction du sens de déplacement du véhicule.

Le perfectionnement qui est décrit maintenant augmente encore la fiabilité de la détermination du sens de déplacement du véhicule, en isolant dans chaque signal de différence $E_{2\,BF} - E_{1\,BF}\,|_{+\varepsilon}$ et $E_{2\,BF} - E_{1\,BF}|_{-\varepsilon}$ la contribution du véhicule par rapport à d'autres mouvements qui se produiraient dans le champ de détection C1 au moment où le véhicule traverse ce champ. Pour cela, les deux signaux de différences sont numérisés: $E_{2\,BF} - E_{1\,BF}\,|_{+\varepsilon}$ produisant le signal numérique $A_1$, et $E_{2\,BF} - E_{1\,BF}\,|_{-\varepsilon}$ produisant le signal numérique $A_2$ (étape /6-0/), puis une transformation de Fourier par rapport au temps est calculée séparément pour chacun des signaux numériques $A_1(t)$ et $A_2(t)$ : $F_{A1}(f)$ étant la transformée de Fourier de $A_1(t)$, et $F_{A2}(f)$ étant la transformée de Fourier de $A_2(t)$ (étape /6-1/). Chaque valeur non-nulle de $F_{A1}(f)$ et $F_{A2}(f)$ correspond à un objet qui se déplace à une vitesse différente dans le champ de détection C1 du cinémomètre 1, avec la vitesse de cet objet qui correspond à la fréquence f en tant que décalage Doppler. Lorsque le contrôle de vitesse est significatif, le véhicule 100E/100R produit la contribution la plus importante aux deux transformées de Fourier $F_{A1}(f)$ et $F_{A2}(f)$ : les modules des amplitudes de $F_{A1}(f)$ et $F_{A2}(f)$ sont maximaux lorsque la fréquence f est égale à la fréquence du décalage Doppler qui est généré par le véhicule ($f = f_d$). Alors le déphasage apparent $\pm\Delta\varphi_{\text{reçu}}$ est la différence entre les arguments des amplitudes complexes respectives de $F_{A1}(f)$ et $F_{A2}(f)$, évaluées pour la valeur $f_{max}$ de la fréquence f qui correspond au maximum en module des amplitudes de $F_{A1}(f)$ et $F_{A2}(f)$. Autrement dit, le signe de $\pm\Delta\varphi_{\text{reçu}}$ est celui de $(\text{Arg}[F_{A1}(f_{max})] - \text{Arg}[F_{A2}(f_{max})])$, où Arg désigne l'argument du nombre complexe qui est contenu entre les crochets (étapes /6-2/ et /6-3/ de la figure 3). Plusieurs méthodes alternatives peuvent être mises en oeuvre pour déterminer le signe de $\pm\Delta\varphi_{\text{reçu}}$ (étape /6-4/). Par exemple, si $Re_1$ et $Im_1$ désignent respectivement les parties réelle et imaginaire de $F_{A1}(f_{max})$, et de même $Re_2$ et $Im_2$ désignent respectivement les parties réelle et imaginaire de $F_{A2}(f_{max})$, alors le signe de $\pm\Delta\varphi_{\text{reçu}}$ est celui de $Im_1 \cdot Re_2 - Im_2 \cdot Re_1$. Finalement, le sens de déplacement du véhicule est l'éloignement par rapport au cinémomètre si $Im_1 \cdot Re_2 - Im_2 \cdot Re_1$ est négatif, et est le rapprochement si $Im_1 \cdot Re_2 - Im_2 \cdot Re_1$ est positif.

Les étapes /6-0/ à /6-4/ sont réalisées par les moyens de traitement 30. Le signal binaire qui est délivré par la sortie S des moyens de traitement 30 est alors utilisé pour sélectionner une séquence de déclenchements pour les dispositifs de prise de vues 2E et 2R. Par exemple, les deux dispositifs 2E et 2R peuvent être systématiquement déclenchés en même temps, avec une temporisation qui dépend du sens de déplacement E ou R qui a été déterminé pour le véhicule. L'image saisie par celui des deux dispositifs 2E et 2R qui est dédié à ce sens de déplacement contient alors l'une des plaques d'immatriculation du véhicule. La temporisation convenable pour chaque sens de déplacement E ou R, par rapport à la détection radioélectrique du véhicule par le cinémomètre 1, est connue de l'Homme du métier. En particulier, cette temporisation est plus rapide pour le sens de déplacement du rapprochement R, que pour le sens de l'éloignement E. L'image qui est saisie simultanément par celui des deux dispositifs de prise de vues 2E et 2R qui ne correspond pas au sens de déplacement déterminé pour le véhicule, est abandonnée.

De façon connue, chaque séquence de déclenchements des dispositifs de prise de vues 2E et 2R, c'est-à-dire la séquence de déclenchements pour le cas du véhicule en éloignement et aussi celle pour le cas du véhicule en rapprochement, peut comprendre deux images qui sont saisies successivement. L'une de ces images est dédiée à la saisie de l'une des deux plaques d'immatriculation dans des conditions d'imagerie qui sont adaptées pour garantir la lisibilité des caractères alphanumériques inscrits sur cette plaque. Ces conditions d'imagerie comprennent notamment des conditions de position du véhicule par rapport au champ optique du dispositif de prise de vues, et aussi des conditions d'éclairement. L'autre image de chaque séquence peut être dédiée à fournir un contexte du contrôle cinémométrique, y compris une reproduction d'une partie des abords de la route 1000 à l'endroit du contrôle. Les conditions d'imagerie de cette image de contexte peuvent être différentes de celles de l'image qui est dédiée à la lisibilité de la plaque d'immatriculation. De façon connue, les images successives d'une même séquence peuvent être séparées d'au moins une durée minimale, à cause de contraintes technologiques telles que par exemple une durée minimale de recharge électrique d'un système d'illumination artificielle. Pour des systèmes existants d'illumination artificielle, cette durée minimale est de 52 ms (milliseconde), à titre d'exemple.

Toutefois, le sens du déplacement qui est déterminé selon l'invention pour le véhicule, peut être utilisé de différentes façons alternatives, telles que :

- un seul dispositif de prise de vues à champ large et résolution élevée peut être couplé au cinémomètre, et agencé pour saisir en image les véhicules qui circulent aussi bien dans un sens que dans l'autre. Le déclenchement de ce dispositif unique est encore temporisé différemment selon que le sens de déplacement qui est déterminé pour le véhicule est l'éloignement ou le rapprochement. De même, des séquences de deux prises de vues peuvent être utilisées pour chaque sens; ou

- deux dispositifs de prise de vues peuvent être couplés au cinémomètre, dont un seul est activé pour chaque sens de déplacement du véhicule qui traverse le champ radioélectrique du cinémomètre. Dans ce cas, le sens de déplacement qui est déterminé pour chaque véhicule sert à sélectionner celui des dispositifs de prise de vues qui doit être activé. Une séquence de prise de vues distincte peut alors être affectée initialement à chaque dispositif. Cette séquence est appliquée chaque fois qu'un véhicule est détecté par le cinémomètre avec une vitesse excessive, et que le sens de déplacement de ce véhicule est celui auquel le dispositif de prise de vues est dédié.

Il est entendu que l'invention telle qu'elle vient d'être décrite en détail peut être reproduite en en modifiant certains aspects. En particulier, les valeurs numériques n'ont été données qu'à titre d'exemples, et certains modules de traitement des signaux peuvent être réalisés différemment ou être agencés dans un ordre différent.

**Revendications**

1. Procédé pour déterminer un sens de déplacement (E, R) d'un véhicule (100E, 100R), en rapprochement ou en éloignement par rapport à un cinémomètre (1) à effet Doppler, ledit cinémomètre étant de type à deux fréquences d'émission ($f_{\text{émise-}\varepsilon}$, $f_{\text{émise+}\varepsilon}$),

   le procédé comprenant les étapes suivantes /1/ à /5/, qui sont effectuées pour chacune des deux fréquences d'émission ($f_{\text{émise-}\varepsilon}$, $f_{\text{émise+}\varepsilon}$) selon un multiplexage temporel :

   /1/ émission d'une onde à ladite fréquence d'émission en direction du véhicule (100E, 100R) ;

   /2/ réception d'une onde produite par réflexion de l'onde émise sur le véhicule (100E, 100R) ;

   /3/ réalisation de deux mélanges de l'onde reçue avec l'onde émise, lesdits deux mélanges ($E_1$, $E_2$) étant réalisés en appliquant à l'onde émise, préalablement aux mélanges, deux déphasages constants et ayant un écart entre eux de 90°, et affectés un-à-un auxdits mélanges ;

   /4/ filtrage de chaque mélange ($E_1$, $E_2$), de façon à obtenir deux signaux de mélanges filtrés ($E_{1\,BF}$, $E_{2\,BF}$) contenant chacun une composante qui varie à une fréquence d'un décalage Doppler ($\pm f_d$) généré par le véhicule (100E, 100R) en déplacement ; et

   /5/ soustraire l'un à l'autre les deux signaux de mélanges filtrés ($E_{1\,BF}$, $E_{2\,BF}$), pour obtenir un signal de différence ($E_{2\,BF} - E_{1\,BF}\,|_{+\varepsilon}$, $E_{2\,BF} - E_{1\,BF}\,|_{-\varepsilon}$) ayant une composante qui varie à la fréquence du décalage Doppler ($\pm f_d$) et qui possède un déphasage initial dû à une durée de propagation de l'onde émise et de l'onde reçue entre le cinémomètre (1) et le véhicule (100E, 100R) ;

   le procédé étant **caractérisé en ce qu'**il comprend en outre une étape /6/ lors de laquelle le sens de déplacement (E, R) du véhicule (100E, 100R), en rapprochement ou en éloignement, est déduit à partir d'un signe d'un déphasage

apparent ($\pm\Delta\varphi_{reçu}$) existant entre les signaux de différences ($E_{2\,BF} - E_{1\,BF}\,|_{+\varepsilon}$, $E_{2\,BF} - E_{1\,BF}|_{-\varepsilon}$) qui ont été obtenus à l'étape /5/ respectivement pour les deux fréquences d'émission ($f_{émise-\varepsilon}$, $f_{émise+\varepsilon}$), pour les composantes des dits signaux de différences à la fréquence du décalage Doppler ($\pm f_d$).

2. Procédé selon la revendication 1, suivant lequel le cinémomètre (1) est couplé à au moins un dispositif de prise de vues (2E, 2R) au sein d'une unité de contrôle routier (10), et suivant lequel le sens de déplacement (E, R) du véhicule (100E, 100R) tel que déduit à l'étape /6/, est utilisé pour sélectionner au moins un instant de déclenchement du dispositif de prise de vues, de sorte qu'une plaque d'immatriculation du véhicule soit contenue dans une image qui est saisie par ledit dispositif de prise de vues audit instant de déclenchement.

3. Procédé selon la revendication 2, suivant lequel le cinémomètre (1) est couplé à deux dispositifs de prise de vues (100E, 100R) au sein de l'unité de contrôle routier (10), les deux dispositifs de prise de vues ayant des directions de pointage (PE, PR) différentes et ajustées de sorte que le véhicule (100E, 100R) soit contenu dans un champ optique de l'un ou l'autre des dispositifs de prise de vues en fonction du sens de déplacement (E, R) du véhicule, et suivant lequel les deux dispositifs de prise de vues sont activés à chaque instant de déclenchement pour saisir deux images simultanément, et l'image qui a été saisie par celui des deux dispositifs de prise de vues dont la direction de pointage a été ajustée pour le sens de déplacement du véhicule tel que déduit à l'étape /6/, est ensuite sélectionnée.

4. Procédé selon l'une quelconque des revendications précédentes, suivant lequel l'étape /6/ comprend les sous-étapes suivantes, effectuées séparément pour chaque fréquence d'émission ($f_{émise-\varepsilon}$, $f_{émise+\varepsilon}$) :

/6-1/ calculer une transformée de Fourier ($F_{A1}$, $F_{A2}$) par rapport au temps, du signal de différence ($E_{2\,BF} - E_{1\,BF}\,|_{+\varepsilon}$, $E_{2\,BF} - E_{1\,BF}\,|_{-\varepsilon}$) qui a été obtenu à l'étape /5/ pour cette fréquence d'émission ;
/6-2/ déterminer une fréquence qui correspond à un maximum de module d'amplitude de la transformée de Fourier ($F_{A1}$, $F_{A2}$) ;
/6-3/ calculer l'amplitude complexe de la transformée de Fourier pour ladite fréquence de maximum ; puis

obtenir le signe du déphasage apparent ($\pm\Delta\varphi_{reçu}$) existant entre les signaux de différences ($E_{2\,BF} - E_{1\,BF}\,|_{+\varepsilon}$, $E_{2\,BF} - E_{1\,BF}\,|_{-\varepsilon}$) qui ont été obtenus à l'étape /5/ respectivement pour les deux fréquences d'émission ($f_{émise-\varepsilon}$, $f_{émise+\varepsilon}$), comme le signe d'une différence d'argument qui existe entre les amplitudes complexes calculées à la sous-étape /6-3/ pour lesdites deux fréquences d'émission.

5. Procédé selon l'une quelconque des revendications précédentes, suivant lequel les étapes /1/ à /4/ sont effectuées pour les deux fréquences d'émission ($f_{émise-\varepsilon}$, $f_{émise+\varepsilon}$), d'une façon continuelle au cours du multiplexage temporel, sur des signaux composés de segments successifs qui sont relatifs en alternance à l'une ou l'autre des fréquences émission, et suivant lequel l'étape /5/ est effectuée séparément sur deux autres signaux qui sont dédiés un-à-un aux deux fréquences d'émission.

6. Procédé selon l'une quelconque des revendications précédentes, comprenant en outre au moins une étape supplémentaire (/5-a/) qui est effectuée pour chaque fréquence d'émission ($f_{émise-\varepsilon}$, $f_{émise+\varepsilon}$), entre les étapes /5/ et /6/, et lors de laquelle chaque signal de différence ($E_{2\,BF} - E_{1\,BF}\,|_{+\varepsilon}$, $E_{2\,BF} - E_{1\,BF}\,|_{-\varepsilon}$) est filtré de façon à supprimer des composantes spectrales provoquées par le multiplexage temporel.

7. Cinémomètre (1) à effet Doppler de type à deux fréquences d'émission ($f_{émise-\varepsilon}$, $f_{émise+\varepsilon}$), adapté pour :

- émettre une onde ayant l'une puis l'autre des deux fréquences d'émission selon un multiplexage temporel, en direction d'un véhicule (100E, 100R) circulant dans un sens de déplacement (E, R) en rapprochement ou en éloignement par rapport au cinémomètre (1) ;
- recevoir une onde produite par réflexion de l'onde émise sur le véhicule (100E, 100R) ;
- pour chaque fréquence d'émission ($f_{émise-\varepsilon}$, $f_{émise+\varepsilon}$), réaliser deux mélanges ($E_1$, $E_2$) de l'onde reçue avec l'onde émise, lesdits deux mélanges étant réalisés en appliquant à l'onde émise, préalablement aux mélanges, deux déphasages constants et ayant un écart entre eux de 90°, et affectés un-à-un auxdits mélanges ;
- filtrer chaque mélange ($E_1$, $E_2$), de façon à obtenir deux signaux de mélanges filtrés ($E_{1\,BF}$, $E_{2\,BF}$) contenant chacun pour chaque fréquence d'émission ($f_{émise-\varepsilon}$, $f_{émise+\varepsilon}$), une composante qui varie à une fréquence d'un décalage Doppler ($\pm f_d$) généré par le véhicule (100E, 100R) en déplacement ; et
- pour chaque fréquence d'émission ($f_{émise-\varepsilon}$, $f_{émise+\varepsilon}$), soustraire l'un à l'autre les deux signaux de mélanges filtrés ($E_{1\,BF}$, $E_{2\,BF}$) qui sont relatifs à ladite fréquence d'émission, pour obtenir un signal de différence ($E_{2\,BF} -$

$E_{1\ BF}\ I_{+\varepsilon}$, $E_{2\ BF} - E_{1\ BF}\ |_{-\varepsilon})$ ayant une composante qui varie à la fréquence du décalage Doppler ($\pm f_d$) et qui possède un déphasage initial dû à une durée de propagation de l'onde émise et de l'onde reçue entre le cinémomètre (1) et le véhicule (100E, 100R) ;

le cinémomètre (1) étant **caractérisé en ce qu'**il comprend en outre des moyens de traitement (30) adaptés pour déduire le sens de déplacement (E, R) du véhicule (100E, 100R), en rapprochement ou en éloignement, à partir d'un signe d'un déphasage apparent ($\pm\Delta\varphi_{reçu}$) existant entre les signaux de différences ($E_{2\ BF} - E_{1\ BF}\ I_{+\varepsilon}$, $E_{2\ BF} - E_{1\ BF}\ |_{-\varepsilon}$) qui ont été obtenus respectivement pour les deux fréquences d'émission ($f_{émise-\varepsilon}$, $f_{émise+\varepsilon}$), pour les composantes des dits signaux de différences à la fréquence de décalage Doppler ($\pm f_d$),
et les moyens de traitement (30) du cinémomètre (1) ayant une sortie (S) adaptée pour délivrer un signal binaire représentatif du sens de déplacement (E, R) du véhicule (100E, 100R).

8. Cinémomètre selon revendication 7, adapté pour mettre en oeuvre un procédé conforme à l'une au moins des revendications 4 à 6.

9. Unité de contrôle routier (10) comprenant :

   - un cinémomètre (1) conforme à la revendication 7 ou 8,
   - au moins un dispositif de prise de vues (2E, 2R), et
   - un contrôleur (3) couplé au dispositif de prise de vues (2E, 2R) et à la sortie (S) des moyens de traitement (30) du cinémomètre (1), qui est adapté pour sélectionner au moins un instant de déclenchement du dispositif de prise de vues (2E, 2R) en fonction du signal binaire délivré par la sortie des moyens de traitement, et pour déclencher le dispositif de prise de vues à chaque instant de déclenchement sélectionné.

10. Unité de contrôle routier selon la revendication 9, comprenant deux dispositifs de prise de vues (2E, 2R) ayant des directions de pointage (PE, PR) respectives qui sont différentes, et dans lequel le contrôleur (3) est couplé à chaque dispositif de prise de vues de façon à activer les deux dispositifs de prise de vues à chaque instant de déclenchement pour saisir deux images simultanément, et le contrôleur est adapté pour sélectionner ensuite celle des deux images qui a été saisie par l'un ou l'autre des dispositifs de prise de vues en fonction du signal binaire délivré par la sortie (S) des moyens de traitement (30).

**Patentansprüche**

1. Verfahren zum Bestimmen einer Bewegungsrichtung (E, R) eines Fahrzeugs (100E, 100R), das sich einem Geschwindigkeitsmessgerät (1), das den Dopplereffekt nutzt, nähert oder sich von diesem entfernt, wobei das Geschwindigkeitsmessgerät vom Typ mit zwei Sendefrequenzen ($f_{gesendet}-\varepsilon$, $f_{gesendet}+\varepsilon$) ist,
wobei das Verfahren die folgenden Schritte /1/ bis /5/ umfasst, welche gemäß einem Zeitmultiplexverfahren für jede der zwei Sendefrequenzen ($f_{gesendet}-\varepsilon$, $f_{gesendet}+\varepsilon$) ausgeführt werden:

   /1/ Senden einer Welle mit der Sendefrequenz in Richtung des Fahrzeugs (100E, 100R);
   /2/ Empfang einer Welle, die durch Reflexion der gesendeten Welle am Fahrzeug (100E, 100R) erzeugt wurde;
   /3/ Durchführung von zwei Mischungen der empfangenen Welle mit der gesendeten Welle, wobei die zwei Mischungen ($E_1$, $E_2$) durchgeführt werden, indem auf die gesendete Welle, vor den Mischungen, zwei konstante und einen Abstand von 90° zwischen sich aufweisende Phasenverschiebungen angewendet werden und eineindeutig den Mischungen zugeordnet werden;
   /4/ Filterung jeder Mischung ($E_1$, $E_2$), um zwei Signale gefilterter Mischungen ($E_{1\ BF}$, $E_{2\ BF}$) zu erhalten, die jeweils eine Komponente enthalten, welche mit einer Frequenz einer von dem sich bewegenden Fahrzeug (100E, 100R) erzeugten Dopplerverschiebung ($\pm f_d$) variiert; und
   /5/ Subtrahieren der zwei Signale gefilterter Mischungen ($E_{1\ BF}$, $E_{2\ BF}$) voneinander, um ein Differenzsignal ($E_{2\ BF} - E_{1\ BF}\ |_{+\varepsilon}$, $E_{2\ BF} - E_{1\ BF}\ |_{-\varepsilon}$) zu erhalten, das eine Komponente aufweist, welche mit der Frequenz der Dopplerverschiebung ($\pm f_d$) variiert und welche eine Anfangsphasenverschiebung aufgrund einer Ausbreitungsdauer der gesendeten Welle und der empfangenen Welle zwischen dem Geschwindigkeitsmessgerät (1) und dem Fahrzeug (100E, 100R) besitzt;

wobei das Verfahren **dadurch gekennzeichnet ist, dass** es außerdem einen Schritt /6/ umfasst, in welchem die Bewegungsrichtung (E, R) des Fahrzeugs (100E, 100R), das sich nähert oder entfernt, aus einem Vorzeichen einer scheinbaren Phasenverschiebung ($\pm\Delta\varphi_{empfangen}$) abgeleitet wird, die zwischen den Differenzsignalen ($E_{2\ BF} - E_{1\ BF}$

$|_{+\varepsilon}$, $E_{2\,BF} - E_{1\,BF}|_{-\varepsilon}$) existiert, welche in Schritt /5/ jeweils für die zwei Sendefrequenzen ($f_{gesendet}-\varepsilon$, $f_{gesendet}+\varepsilon$) für die Komponenten der Differenzsignale mit der Frequenz der Dopplerverschiebung ($\pm f_d$) erhalten wurden.

2. Verfahren nach Anspruch 1, bei welchem das Geschwindigkeitsmessgerät (1) mit wenigstens einer Bildaufnahmevorrichtung (2E, 2R) innerhalb einer Straßenverkehrs-Kontrolleinheit (10) gekoppelt ist und bei welchem diejenige Bewegungsrichtung (E, R) des Fahrzeugs (100E, 100R), die in Schritt /6/ abgeleitet wurde, verwendet wird, um wenigstens einen Auslösezeitpunkt der Bildaufnahmevorrichtung zu wählen, so dass ein Kennzeichen des Fahrzeugs in einem Bild enthalten ist, welches von der Bildaufnahmevorrichtung zu dem Auslösezeitpunkt erfasst wird.

3. Verfahren nach Anspruch 2, bei welchem das Geschwindigkeitsmessgerät (1) mit zwei Bildaufnahmevorrichtungen (100E, 100R) innerhalb der Straßenverkehrs-Kontrolleinheit (10) gekoppelt ist, wobei die zwei Bildaufnahmevorrichtungen unterschiedliche Ausrichtungen (PE, PR) aufweisen und so eingestellt sind, dass das Fahrzeug (100E, 100R), in Abhängigkeit von der Bewegungsrichtung (E, R) des Fahrzeugs, in einem optischen Feld der einen oder der anderen der Bildaufnahmevorrichtungen enthalten ist, und bei welchem die zwei Bildaufnahmevorrichtungen zu jedem Auslösezeitpunkt aktiviert werden, um zwei Bilder gleichzeitig zu erfassen, und anschließend das Bild ausgewählt wird, welches von derjenigen der zwei Bildaufnahmevorrichtungen erfasst worden ist, deren Ausrichtung für diejenige Bewegungsrichtung des Fahrzeugs eingestellt wurde, die in Schritt /6/ abgeleitet wurde.

4. Verfahren nach einem der vorhergehenden Ansprüche, bei welchem der Schritt /6/ die folgenden Teilschritte umfasst, die für jede Sendefrequenz ($f_{gesendet}-\varepsilon$, $f_{gesendet}+\varepsilon$) getrennt ausgeführt werden:

/6-1/ Berechnen einer Fourier-Transformierten ($F_{A1}$, $F_{A2}$) des Differenzsignals ($E_{2\,BF} - E_{1\,BF}|_{+\varepsilon}$, $E_{2\,BF} - E_{1\,BF}|_{-\varepsilon}$), welches in Schritt /5/ für diese Sendefrequenz erhalten wurde, bezüglich der Zeit;

/6-2/ Bestimmen einer Frequenz, welche einem Maximum eines Amplitudenbetrags der Fourier-Transformierten ($F_{A1}$, $F_{A2}$) entspricht;

/6-3/ Berechnen der komplexen Amplitude der Fourier-Transformierten für diese Maximumsfrequenz; anschließend Gewinnen des Vorzeichens der scheinbaren Phasenverschiebung ($\pm\Delta\varphi_{empfangen}$), die zwischen den Differenzsignalen ($E_{2\,BF} - E_{1\,BF}|_{+\varepsilon}$, $E_{2\,BF} - E_{1\,BF}|_{-\varepsilon}$) existiert, welche in Schritt /5/ für die zwei Sendefrequenzen ($t_{gesendet}-\varepsilon$, $f_{gesendet}+\varepsilon$) jeweils erhalten wurden, als das Vorzeichen einer Argumentdifferenz, welche zwischen den komplexen Amplituden existiert, die im Teilschritt /6-3/ für die zwei Sendefrequenzen berechnet wurden.

5. Verfahren nach einem der vorhergehenden Ansprüche, bei welchem die Schritte /1/ bis /4/ für die zwei Sendefrequenzen ($f_{gesendet}-\varepsilon$, $f_{gesendet}+\varepsilon$) kontinuierlich im Verlauf der Zeitmultiplexierung an Signalen ausgeführt werden, die aus aufeinander folgenden Segmenten bestehen, welche sich abwechselnd auf die eine oder die andere der Sendefrequenzen beziehen, und bei welchem Schritt /5/ getrennt an zwei weiteren Signalen ausgeführt wird, welche eineindeutig für die zwei Sendefrequenzen vorgesehen sind.

6. Verfahren nach einem der vorhergehenden Ansprüche, welches außerdem wenigstens einen zusätzlichen Schritt (/5-a/) umfasst, welcher für jede Sendefrequenz ($f_{gesendet}-\varepsilon$, $f_{gesendet}+\varepsilon$) zwischen den Schritten /5/ und /6/ ausgeführt wird und in welchem jedes Differenzsignal ($E_{2\,BF} - E_{1\,BF}|_{+\varepsilon}$, $E_{2\,BF} - E_{1\,BF}|_{-\varepsilon}$) gefiltert wird, um Spektralkomponenten zu entfernen, die durch die Zeitmultiplexierung hervorgerufen wurden.

7. Geschwindigkeitsmessgerät (1), das den Dopplereffekt nutzt, vom Typ mit zwei Sendefrequenzen ($f_{gesendet}-\varepsilon$, $f_{gesendet}+\varepsilon$), das ausgelegt ist zum:

- Senden einer Welle, welche gemäß einem Zeitmultiplexverfahren die eine und dann die andere der zwei Sendefrequenzen aufweist, in Richtung eines Fahrzeugs (100E, 100R), das in einer Bewegungsrichtung (E, R) fährt, wobei es sich dem Geschwindigkeitsmessgerät (1) nähert oder sich von ihm entfernt;
- Empfangen einer Welle, die durch Reflexion der gesendeten Welle am Fahrzeug (100E, 100R) erzeugt wurde;
- für jede Sendefrequenz ($f_{gesendet}-\varepsilon$, $f_{gesendet}+\varepsilon$), Durchführen von zwei Mischungen ($E_1$, $E_2$) der empfangenen Welle mit der gesendeten Welle, wobei die zwei Mischungen durchgeführt werden, indem auf die gesendete Welle, vor den Mischungen, zwei konstante und einen Abstand von 90° zwischen sich aufweisende Phasenverschiebungen angewendet werden und eineindeutig den Mischungen zugeordnet werden;
- Filtern jeder Mischung ($E_1$, $E_2$), um zwei Signale gefilterter Mischungen ($E_{1\,BF}$, $E_{2\,BF}$) zu erhalten, die jeweils für jede Sendefrequenz ($f_{gesendet}-\varepsilon$, $f_{gesendet}+\varepsilon$) eine Komponente enthalten, welche mit einer Frequenz einer von dem sich bewegenden Fahrzeug (100E, 100R) erzeugten Dopplerverschiebung ($\pm f_d$) variiert; und
- für jede Sendefrequenz (($f_{gesendet}-\varepsilon$, $f_{gesendet}+\varepsilon$), Subtrahieren der zwei Signale gefilterter Mischungen ($E_{1\,BF}$, $E_{2\,BF}$) voneinander, die sich auf diese Sendefrequenz beziehen, um ein Differenzsignal ($E_{2\,BF} - E_{1\,BF}|_{+\varepsilon}$, $E_{2\,BF}$

- $E_{1\,BF}|_{-\varepsilon}$) zu erhalten, das eine Komponente aufweist, welche mit der Frequenz der Dopplerverschiebung ($\pm f_d$) variiert und welche eine Anfangsphasenverschiebung aufgrund einer Ausbreitungsdauer der gesendeten Welle und der empfangenen Welle zwischen dem Geschwindigkeitsmessgerät (1) und dem Fahrzeug (100E, 100R) besitzt;

wobei das Geschwindigkeitsmessgerät (1) **dadurch gekennzeichnet ist, dass** es außerdem Verarbeitungsmittel (30) umfasst, die dafür ausgelegt sind, die Bewegungsrichtung (E, R) des Fahrzeugs (100E, 100R), das sich nähert oder entfernt, aus einem Vorzeichen einer scheinbaren Phasenverschiebung ($\pm\Delta\varphi_{empfangen}$) abzuleiten, die zwischen den Differenzsignalen ($E_{2\,BF} - E_{1\,BF}|_{+\varepsilon}$, $E_{2\,BF} - E_{1\,BF}|_{-\varepsilon}$) existiert, welche jeweils für die zwei Sendefrequenzen ($f_{gesendet}-\varepsilon$, $f_{gesendet}+\varepsilon$) für die Komponenten der Differenzsignale mit der Frequenz der Dopplerverschiebung ($\pm f_d$) erhalten wurden,
und wobei die Verarbeitungsmittel (30) des Geschwindigkeitsmessgeräts (1) einen Ausgang (S) aufweisen, der dafür ausgelegt ist, ein binäres Signal zu liefern, das für die Bewegungsrichtung (E, R) des Fahrzeugs (100E, 100R) repräsentativ ist.

**8.** Geschwindigkeitsmessgerät nach Anspruch 7, welches dafür ausgelegt ist, ein Verfahren gemäß wenigstens einem der Ansprüche 4 bis 6 durchzuführen.

**9.** Straßenverkehrs-Kontrolleinheit (10), welche umfasst:

- ein Geschwindigkeitsmessgerät (1) gemäß Anspruch 7 oder 8,
- wenigstens eine Bildaufnahmevorrichtung (2E, 2R) und
- eine Steuereinrichtung (3), welche mit der Bildaufnahmevorrichtung (2E, 2R) und mit dem Ausgang (S) der Verarbeitungsmittel (30) des Geschwindigkeitsmessgeräts (1) gekoppelt ist und welche dafür ausgelegt ist, wenigstens einen Auslösezeitpunkt der Bildaufnahmevorrichtung (2E, 2R) in Abhängigkeit von dem binären Signal zu wählen, das von dem Ausgang der Verarbeitungsmittel geliefert wird, und die Bildaufnahmevorrichtung zu jedem gewählten Auslösezeitpunkt auszulösen.

**10.** Straßenverkehrs-Kontrolleinheit nach Anspruch 9, welche zwei Bildaufnahmevorrichtungen (2E, 2R) umfasst, die jeweilige Ausrichtungen (PE, PR) aufweisen, welche unterschiedlich sind, und wobei die Steuereinrichtung (3) mit jeder Bildaufnahmevorrichtung gekoppelt ist, um die zwei Bildaufnahmevorrichtungen zu jedem Auslösezeitpunkt zu aktivieren, um zwei Bilder gleichzeitig zu erfassen, und die Steuereinrichtung dafür ausgelegt ist, anschließend dasjenige der zwei Bilder, welches von der einen oder der anderen der Bildaufnahmevorrichtungen erfasst worden ist, in Abhängigkeit von dem binären Signal auszuwählen, das vom Ausgang (S) der Verarbeitungsmittel (30) geliefert wurde.

**Claims**

**1.** Method for determining an oncoming or outgoing direction of travel (E, R) of a vehicle (100E, 100R) relative to a Doppler radar (1), said radar being of a type using two transmission frequencies ($f_{transmitted-\varepsilon}$, $f_{transmitted+\varepsilon}$),
the method comprising the following steps /1/ to /5/, which are carried out for each of the two transmission frequencies ($f_{transmitted-\varepsilon}$, $f_{transmitted+\varepsilon}$) according to time-division multiplexing:

/1/ transmitting a wave at said transmission frequency towards the vehicle (100E, 100R);
/2/ receiving a wave produced by reflection of the transmitted wave on the vehicle (100E, 100R);
/3/ producing two mixtures of the received wave with the transmitted wave, said two mixtures ($E_1$, $E_2$) being produced by applying, to the transmitted wave, prior to the mixing operations, two constant phase differences that differ by 90° and that are allocated one to one to said mixtures;
/4/ filtering each mixture ($E_1$, $E_2$) in order to obtain two filtered mixture signals ($E_{1\,BF}$, $E_{2\,BF}$), each containing a component that varies at a frequency of a Doppler shift ($\pm f_d$) generated by the vehicle (100E, 100R) in motion; and
/5/ subtracting the two filtered mixture signals ($E_{1\,BF}$, $E_{2\,BF}$) from one another in order to obtain a difference signal ($E_{2\,BF} - E_{1\,BF}|_{+\varepsilon}$, $E_{2\,BF} - E_{1\,BF}|_{-\varepsilon}$) having a component that varies at the frequency of the Doppler shift ($\pm f_d$) and that has an initial phase shift due to a propagation duration of the transmitted wave and of the received wave between the radar (1) and the vehicle (100E, 100R);

the method being **characterised in that** it further comprises a step /6/ wherein the oncoming or outgoing direction of travel (E, R) of the vehicle (100E, 100R) is deduced from a sign of an apparent phase difference ($\pm\Delta\varphi_{received}$)

existing between the difference signals ($E_{2\,BF} - E_{1\,BF}\,|_{+\varepsilon}$, $E_{2\,BF} - E_{1\,BF}|_{-\varepsilon}$) that were obtained in step /5/ respectively for the two transmission frequencies ($f_{\text{transmitted}-\varepsilon}$, $f_{\text{transmitted}+\varepsilon}$), for the components of said difference signals at the frequency of the Doppler shift ($\pm f_d$).

2. Method according to claim 1, wherein the radar (1) is coupled to at least one image capture device (2E, 2R) within a roadside check unit (10), and wherein the direction of travel (E, R) of the vehicle (100E, 100R) as deduced in step /6/, is used to select at least one time at which the image capture device is triggered, so that a licence plate of the vehicle is contained within an image that is captured by said image capture device at said time of triggering.

3. Method according to claim 2, wherein the radar (1) is coupled to two image capture devices (100E, 100R) within the roadside check unit (10), the two image capture devices having pointing directions (PE, PR) that are different and adjusted so that the vehicle (100E, 100R) is contained in a field of view of either of the image capture devices as a function of the direction of travel (E, R) of the vehicle, and wherein the two image capture devices are actuated at each time of triggering in order to capture two images simultaneously, and the image that has been captured by that one of the two image capture devices whose pointing direction has been adjusted for the direction of travel of the vehicle as deduced in step /6/, is then selected.

4. Method according to any one of the preceding claims, wherein step /6/ comprises the following sub-steps, carried out separately for each transmission frequency ($f_{\text{transmitted}-\varepsilon}$, $f_{\text{transmitted}+\varepsilon}$):

/6-1/ calculating a Fourier transform ($F_{A1}$, $F_{A2}$) with respect to time, of the difference signal ($E_{2\,BF} - E_{1\,BF}\,|_{+\varepsilon}$, $E_{2\,BF} - E_{1\,BF}\,|_{-\varepsilon}$) that was obtained in step /5/ for this transmission frequency;
/6-2/ determining a frequency that corresponds to a maximum amplitude modulus of the Fourier transform ($F_{A1}$, $F_{A2}$);
/6-3/ calculating the complex amplitude of the Fourier transform for said maximum frequency; then

obtaining the sign of the apparent phase difference ($\pm\Delta\varphi_{\text{received}}$) existing between the difference signals ($E_{2\,BF} - E_{1\,BF}\,|_{+\varepsilon}$, $E_{2\,BF} - E_{1\,BF}\,|_{-\varepsilon}$) that were obtained in step /5/ respectively for the two transmission frequencies ($f_{\text{transmitted}-\varepsilon}$, $f_{\text{transmitted}+\varepsilon}$), as the sign of an argument difference that exists between the complex amplitudes calculated in the sub-step /6-3/ for said two transmission frequencies.

5. Method according to any one of the preceding claims, wherein steps /1/ to /4/ are carried out for the two transmission frequencies ($f_{\text{transmitted}-\varepsilon}$, $f_{\text{transmitted}+\varepsilon}$), in a continual manner during the time-division multiplexing, on signals composed of successive segments that relate in alternation to either of the transmission frequencies, and wherein step /5/ is carried out separately on two other signals, which are dedicated, one-by-one, to the two transmission frequencies.

6. Method according to any one of the preceding claims, further comprising at least one additional step (/5-a/), which is carried out for each transmission frequency ($f_{\text{transmitted}-\varepsilon}$, $f_{\text{transmitted}+\varepsilon}$), between steps /5/ and /6/, and during which each difference signal ($E_{2\,BF} - E_{1\,BF}\,|_{+\varepsilon}$, $E_{2\,BF} - E_{1\,BF}\,|_{-\varepsilon}$) is filtered so as to remove spectral components caused by the time-division multiplexing.

7. Doppler radar (1) of a type using two transmission frequencies ($f_{\text{transmitted}-\varepsilon}$, $f_{\text{transmitted}+\varepsilon}$), suitable for:

- emitting a wave having one and then the other of the two transmission frequencies according to a time-division multiplexing, towards a vehicle (100E, 100R) travelling in an oncoming or outgoing direction of travel (E, R) relative to the radar (1);
- receiving a wave produced by reflection of the transmitted wave on the vehicle (100E, 100R);
- for each transmission frequency ($f_{\text{transmitted}-\varepsilon}$, $f_{\text{transmitted}+\varepsilon}$), producing two mixtures ($E_1$, $E_2$) of the received wave with the transmitted wave, said two mixtures being produced by applying, to the transmitted wave, prior to the mixings, two constant phase differences that differ by 90° and that are allocated one to one to said mixtures;
- filtering each mixture ($E_1$, $E_2$) in order to obtain two filtered mixture signals ($E_{1\,BF}$, $E_{2\,BF}$), each containing, for each transmission frequency ($f_{\text{transmuted}-\varepsilon}$, $f_{\text{transmitted}+\varepsilon}$), a component that varies at a frequency of a Doppler shift ($\pm f_d$) generated by the vehicle (100E, 100R) in motion; and
- for each transmission frequency ($f_{\text{transmitted}-\varepsilon}$, $f_{\text{transmitted}+\varepsilon}$), subtracting the two filtered mixture signals ($E_{1\,BF}$, $E_{2\,BF}$) from one another, which relate to said transmission frequency, in order to obtain a difference signal ($E_{2\,BF} - E_{1\,BF}\,|_{+\varepsilon}$, $E_{2\,BF} - E_{1\,BF}\,|_{-\varepsilon}$) having a component that varies at the frequency of the Doppler shift ($\pm f_d$) and that has an initial phase shift due to a propagation duration of the transmitted wave and of the received wave between the radar (1) and the vehicle (100E, 100R);

the radar (1) being **characterised in that** it further comprises processing means (30) suitable for deducing the oncoming or outgoing direction of travel (E, R) of the vehicle (100E, 100R), from a sign of an apparent phase difference ($\pm\Delta\varphi_{received}$) existing between the difference signals ($E_{2\,BF} - E_{1\,BF}\,|_{+\varepsilon}$, $E_{2\,BF} - E_{1\,BF}\,|_{-\varepsilon}$) that were obtained respectively for the two transmission frequencies ($f_{transmitted-\varepsilon}$, $f_{transmitted+\varepsilon}$), for the components of said difference signals at the frequency of the Doppler shift ($\pm f_d$), and the processing means (30) of the radar (1) having an output (S) suitable for emitting a binary signal representative of the direction of travel (E, R) of the vehicle (100E, 100R).

8. Radar according to claim 7, suitable for implementing a method according to at least one of claims 4 to 6.

9. Roadside check unit (10) comprising:

    - a radar (1) according to either claim 7 or claim 8,
    - at least one image capture device (2E, 2R), and
    - a controller (3) coupled to the image capture device (2E, 2R) and to the output (S) of the processing means (30) of the radar (1), which is suitable for selecting at least one time of triggering of the image capture device (2E, 2R) as a function of the binary signal emitted by the output of the processing means, and for activating the image capture device at each selected time of triggering.

10. Roadside check unit according to claim 9, comprising two image capture devices (2E, 2R) having respective pointing directions (PE, PR) that are different, and wherein the controller (3) is coupled to each image capture device so as to activate the two image capture devices at each time of triggering in order to capture two images simultaneously, and the controller is suitable for subsequently selecting that one of the two images that was captured by either of the image capture devices as a function of the binary signal emitted by the output (S) of the processing means (30).

**FIG. 1**

EP 3 012 657 B1

**FIG. 2**

| étape | $f_{émise+\varepsilon} = f_0+\varepsilon$ | $f_{émise-\varepsilon} = f_0-\varepsilon$ |
|---|---|---|
| /1/ | émission | émission |
| /2/ | réception | réception |
| /3/ | $\begin{cases} \text{mélange avec déphasage } 90° \longrightarrow E_1 \\ \text{mélange avec déphasage } 0° \longrightarrow E_2 \end{cases}$ | $\begin{cases} \text{mélange avec déphasage } 90° \longrightarrow E_1 \\ \text{mélange avec déphasage } 0° \longrightarrow E_2 \end{cases}$ |
| /4/ | filtrage BF $\longrightarrow E_{1\,BF}, E_{2\,BF}$ | filtrage BF $\longrightarrow E_{1\,BF}, E_{2\,BF}$ |
| /5/ | soustraction $\longrightarrow E_{2\,BF} - E_{1\,BF}\big|_{+\varepsilon}$ | soustraction $\longrightarrow E_{2\,BF} - E_{1\,BF}\big|_{-\varepsilon}$ |
| /5-a/ | filtrage | filtrage |
| /6-0/ | numerisation $\longrightarrow A_1$ | numerisation $\longrightarrow A_2$ |
| /6-1/ | transformation de Fourier $\longrightarrow F_{A1}(f)$ | transformation de Fourier $\longrightarrow F_{A2}(f)$ |
| /6-2/ | sélection de $f_{max}$ | sélection de $f_{max}$ |
| /6-3/ | calcul de $F_{A1}(f_{max})$ | calcul de $F_{A2}(f_{max})$ |

/6-4/   signe de $\Delta\varphi_{reçu}$ = signe de $(\text{Arg}\,[F_{A1}(f_{max})] - \text{Arg}\,[F_{A2}(f_{max})])$

/6/   sens de circulation E ou R

**FIG. 3**

**EP 3 012 657 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0933648 A